(19) Europäisches Patentamt
European Patent Office
Office européen des brevets

(11) **EP 2 538 253 A1**

(12) **EUROPEAN PATENT APPLICATION**

(43) Date of publication:
**26.12.2012 Bulletin 2012/52**

(51) Int Cl.:
**G02B 6/26** *(2006.01)*  **H04B 10/00** *(2006.01)*
**H04J 14/02** *(2006.01)*

(21) Application number: **11305802.8**

(22) Date of filing: **23.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Koebele, Clemens**
  **91620 NOZAY (FR)**
• **Salsi, Massimiliano**
  **91620 NOZAY (FR)**

(74) Representative: **Shamsaei Far, Hassan**
**Alcatel-Lucent International**
**32, avenue Kléber**
**92700 Colombes (FR)**

(54) **A multimode optical fiber interferometer**

(57) An unbalanced interferometer comprising a first single mode optical fiber portion, a second single mode optical fiber portion and a multi-mode optical fiber, wherein the multi-mode optical fiber is coupled by a first splicing at one end to the first single mode optical fiber and by a second splicing at another end to the second single mode optical fiber, the first splicing comprising a first offset distance between a longitudinal axis of the multi-mode optical fiber and a longitudinal axis of the first single mode optical fiber.

Fig. 3a

**(Cont. next page)**

EP 2 538 253 A1

33

Offset (O)

31

Fig. 3b

**Description**

The present invention relates to optical components.

BACKGROUND ART

Recently it has been reported in several publications that shaping the spectrum in WDM transmission systems may improve the performance in optical transmission (see for example G. Gavioli et al., OFC 2010, Paper OThD3 (2010) and M. Salsi et al., OFC 2011, Paper OMR2 (2011).

In some of the known publications (for example Salsi et al) it is argued that a duly designed interleaver may contribute to increasing the performance in transmission to up to about 1 dB as compared to a conventional interleaver with "flat" top output waveshape. There is a certain belief in the field of spectral engineering that a flat power spectral density typically provides better signal performance as compared to a non-flat power spectral density.

SUMMARY

It is therefore desired to provide devices capable of generating suitable spectral shapes.

One known solution relates to using a programmable LCOS based filter (LCOS standing for liquid crystal on silicon). This principle was used in laboratory for the experiment referred to in Salsi et al, referenced above. However such solution is typically costly (typically more than 40,000 US$).

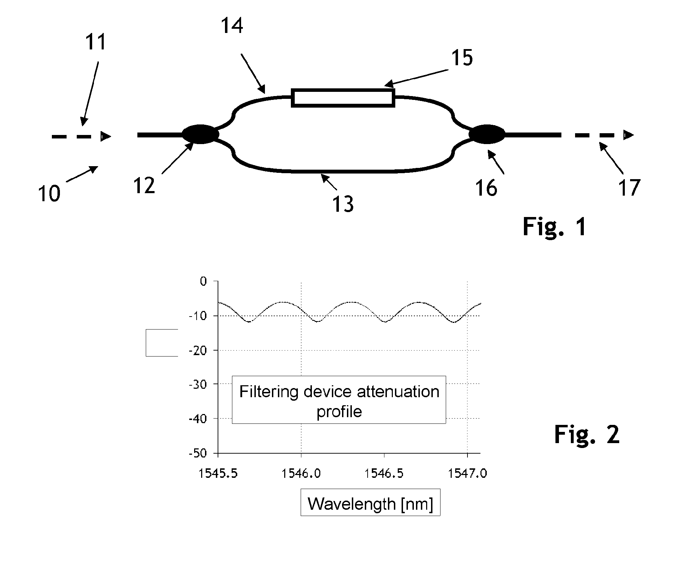

Another known solution may be based on the use of an unbalanced delay line interferometer. This solution is schematically exemplified in figure 1. The filter 10 of figure 1 is configured to receive an optical signal 11 at an input thereof. The optical signal 11 is input into a first coupler 12 where it is split into two components of the same optical signal. Each component propagates through a respective branch 13 or 14 of the device. The branches 13 and 14 are typically of the same type However, one of the branches 14 includes an unbalanced delay line 15. The delay line 15 introduces a time delay on the signal propagating through branch 14 with respect to the signal propagating through branch 13 (assuming the latter does not have an additional delay line). The signals propagating through the two branches 13 and 14 are then recombined in a second coupler 16 and are forwarded as a combined output signal 17. The time delay caused by the delay line 15 causes an offset in the phase of the signals propagating through the two branches 13 and 14. The phase offset in turn causes, at the output coupler 16, destructive and constructive recombination of the signals, periodically in the frequency domain, thereby providing a periodic filtering waveshape as schematically shown in figure 2.

This solution however has drawbacks as it typically produces a relatively high loss (about 8.2 dB) mainly due to the use of two couplers which typically cause a loss of about 3dB each. Besides the described solution is relatively expensive (for example the typical cost of a delay line interferometer may be higher than 2000 US$).

Embodiments of the present invention feature an unbalanced interferometer based on multi-mode optical fiber wherein an offset splice is provided between a multi-mode optical fiber and at least two optical single mode optical fiber portions. According to some embodiments there is provided an unbalanced interferometer comprising a first single mode optical fiber portion, a second single mode optical fiber portion and a multi-mode optical fiber, wherein the multi-mode optical fiber is coupled by a first splicing at one end to the first single mode optical fiber and by a second splicing at another end to the second single mode optical fiber, the first splicing comprising a first offset distance between a longitudinal axis of the multi-mode optical fiber and a longitudinal axis of the first single mode optical fiber.

According to some specific embodiments, the second splicing comprises a second offset distance between a longitudinal axis of the multi-mode optical fiber and a longitudinal axis of the second single mode optical fiber.

According to some specific embodiments, the first and the second offset distances are equal.

Preferably the multi-mode optical fiber is configured to allow propagation of less than ten optical modes, more preferable the multi-mode optical fiber is configured to allow propagation of only two optical modes.

Preferably the interferometer is configured to transfer optical energy from the first single mode optical fiber into at least two modes of the multimode optical fiber wherein the at least two modes of the multimode optical fiber have different propagation constants thereby causing a time delay between the two modes at the output end of the multimode optical fiber.

Preferably the interferometer is configured to generate a quasi-constant time delay thereby causing periodically, in the frequency domain, different phase offsets between the two modes wherein said periodically different phase offsets causes interference thereby providing a periodic filter with sinusoidal waveshape at the output thereof.

Preferably the multimode optical fiber has a length wherein said length is inversely proportional to a product of a differential mode group delay of the multimode optical fiber and the difference in frequency peaks of the at least two mode propagating, in use, in the multimode optical fiber.

Preferably a filter center depth of the interferometer is variable with variation in the offset distance.

These and further features and advantages of the present invention are described in more detail, for the purpose of illustration and not limitation, in the following description as well as in the claims with the aid of the accompanying drawings

BRIEF DESCRIPTION OF THE DRAWINGS

Figure 1, already discussed, is an exemplary schematic representation of a filter based on an unbalanced delay line interferometer structure according to known solutions.

Figure 2 is, already discussed is an exemplary schematic representation of an attenuation response profile of the filter of figure 1.

Figures 3a and 3b are exemplary schematic representations in perspective and cross-section respectively of a filter according to some embodiments.

Figures 4a and 4b show simulation results to show field amplitude values and filter center depth values respectively as a function of offset distance.

Figures 5 is an exemplary schematic representation of an optical device comprising the filter of figure 3.

DETAILED DESCRIPTION

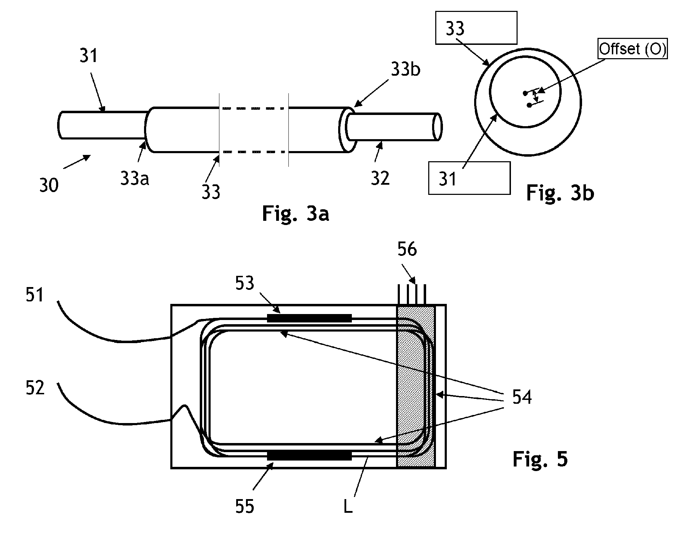

In figure 3a, a perspective view of an exemplary schematic representation of a filter according to some embodiments is shown. The filter 30 of figure 3a is based on an unbalanced interferometer comprising a first single mode optical fiber portion 31, a second single mode optical fiber portion 32 and a multi-mode optical fiber 33. Herein the term "unbalanced" for the interferometer is meant to refer to the fact that there are different amounts of energy in the two propagation paths of the optical modes. The first single mode optical fiber portion 31 is coupled to a first end 33a of the multi-mode optical fiber 33. The coupling is performed by splicing the first single mode optical fiber portion 31 to the multimode optical fiber 33. Said splicing, herein also referred to as first splicing, is performed such that an offset distance is provided between a longitudinal axis of the multi-mode optical fiber and a longitudinal axis of the first single mode optical fiber. The position of the first optical fiber with respect to the multi-mode optical fiber is schematically shown in a cross-sectional representation in figure 3b wherein the offset distance is represented by reference letter O.

Likewise, the second single mode optical fiber portion 32 is coupled to a second end 33b of the multi-mode optical fiber 33. The coupling is also performed by splicing the second single mode optical fiber portion 32 to the multi-mode optical fiber 33. Said splicing, herein also referred to as second splicing, is performed such that an offset distance is provided between a longitudinal axis of the multimode optical fiber and a longitudinal axis of the second single mode optical fiber. Although not specifically shown, the position of the second optical fiber with respect to the multi-mode optical fiber may be similar to that shown with respect to the first optical fiber represented in figure 3b.

With the above-described structure, at the first end, namely the input end 33a, the splicing offset may lead to a coupling of the energy from the first single mode fiber 31 into the multi-mode optical fiber 33.

For the sake of simplicity of the present description, it is assumed that the multimode optical fiber is in this case a bi-modal fiber which may be a preferred option. However, other multi-mode optical fibers may be used, in particular optical fibers capable of supporting less than ten optical modes, also referred to as "few-mode" optical fibers may also be used according to the specific application.

Referring back to figure 3a, once the optical signal is input from the first single mode optical fiber 31 into the bi-modal optical fiber 33, the optical energy is transferred from the first single mode optical fiber 31 into two modes of the bimodal optical fiber 33 as the optical signal is split into two components. The two modes of the bi-modal optical fiber 33 have different propagation constants leading to a time delay between the two modes when they arrive at the output end 33b, of the bi-modal fiber 33.

At the output end 33b of the bi-modal optical fiber 33, due to the existence of the second offset splicing, energy from both modes is re-coupled (or recombined) into the second single mode optical fiber portion 32.

Depending on the wavelength (frequency) of the optical signal, a quasi-constant time delay may cause periodically different phase offsets between the two modes. This periodicity may cause a destructive/constructive interference thereby providing a periodic filter with sinusoidal waveshape at the output thereof (unbalanced delay line interferometer) similar to the one represented in figure 2. It is to be noted that the offset distance O and the length of the multi-mode optical fiber L have impact on the response of the device as described below.

Referring back to figures 3a and 3b, the following design criteria may be taken into account in relation to the bimodal fiber interferometer device 30:

- The frequency difference between two peaks, $\Delta f$

- One reference peak frequency $f_{peak}$
- The filter center depth, FCD.

The above referenced frequency is the frequency at which a filtering peak needs to be obtained, this could be for example the center frequency of a channel.

In order to better understand the impact of the two parameters, offset distance O and the length of the multi-mode optical fiber L, on the above-mentioned criteria the following basic equations may be used with respect to this device:

$$E_{out} = A_1 \cdot e^{i\omega t} + A_2 \cdot e^{i(\omega(t+\Delta T))}$$

$$E_{out} = A_1 \cdot e^{i\omega t} + A_2 \cdot e^{i\omega t} \cdot e^{i\omega \Delta T}$$

$$E_{out} = e^{i\omega t}(A_1 + A_2 \cdot e^{i\omega \Delta T})$$

$$\Delta T = L \cdot DMGD$$

Where $E_{out}$ is the output field from the bi-modal fiber at output end 33b, $A_1$ and $A_2$ are amplitudes of the first mode and the second mode respectively, $\Delta T$ is the time delay between the first and second optical mode and w represents the angular frequency for the reference frequency f.

Therefore, the length L can now be determined with respect to the desired $\Delta f$ and $f_{peak}$ values using the following calculations:

$$\omega_1 \Delta T - \omega_2 \Delta T = 2\pi \qquad\qquad \omega_{peak}\Delta T = 2n\pi$$

$$\omega_1 - \omega_2 = \frac{2\pi}{\Delta T} \qquad\qquad f_{peak} = \frac{n}{\Delta T}$$

$$\Delta f = \frac{1}{\Delta T} \longrightarrow \boxed{f_{peak} = n \cdot \Delta f}$$

$$\Delta f = \frac{1}{L \cdot DMGD} \qquad\qquad f_{peak} = \frac{n}{L \cdot DMGD}$$

$$L = \frac{1}{\Delta f \cdot DMGD} = \frac{n}{f_{peak} \cdot DMGD}$$

Where DMGD stands for differential mode group delay, n is a positive integer representing a value related to the index of the peak. For example considering the whole spectrum, one may obtain a peak of the filtering function for every vaue of n. So the first peak may be always at f=0 and the other peaks at multiples of $\Delta f$. And the indices 1 and 2 refer to the first and second modes respectively.

The following non-limiting example is provided in order to illustrate how the parameters L and O are determined.

Assuming a frequency peak value for the filter to be at $f_{peak}$ = 195.025 THz, and $\Delta f$ = 50GHz (therefore, the maximum attenuation of the filter is at 195 THz, which is on the ITU-grid). It is further assumed that a bimodal fiber with a differential mode group delay DMGD of 10ns/km is used.

Based on a first approach, the length of the bi-modal fiber may be calculated in the following manner:

$$L = \frac{1}{\Delta f \cdot DMGD} = \frac{1}{50GHz \cdot 10\frac{ps}{m}} = 2m$$

However, it is desired to determine a more precise position for the frequency peak. This is because it is desirable to have the peak value in the center of the channel and not at its edge, that is in this case it is preferred to have the peak value at 195.025 THz and not at 195.000 THz. Therefore, in order to obtain a finer control on the fiber length the following operation may be considered.

Based on calculation of the ratio of the peak frequency and $\Delta f$, the following result is obtained for n:

$$n = \frac{195.025}{0.05} = 3900.5$$

As the above value is not an integer, one may choose the integer value of 3900 which when applied in the same ratio above yields:

$$\Delta f = \frac{195.025THz}{3900} = 50.00641GHz$$

Therefore a shift of the filter-peak with respect to the channel center of 6.41 MHz per channel is observed.

Assuming there are 90 channels in the C-Band, this leads to a maximum shift of 577MHz which is 1.15% of the channel bandwidth representing a tolerable value. It is to be noted that if $f_{peak}$ is chosen to be the central channel, only 45 channels would be taken into account because (this is because with a total number of 90 channels there are 45 channels on both sides of the central channel and therefore the channels with the maximum shift are 45 channels away on both sides).

Based on the above value obtained for $\Delta f$ the value of L can be determined as follows:

$$L = \frac{1}{\Delta f \cdot DMGD} = \frac{1}{50.00641GHz \cdot 10\frac{ps}{m}} = 1999.7mm$$

It is noted that a temperature control on the bi-modal fiber may allow for some variation of the order of several tenths of °C, which may provide the desired adjustment on the length, considering L=2m.

The offset distance O determines the filter center depth (FCD). This is because such offset has influence on the amount of power that is coupled from the LP01 mode of the single mode fiber into the two spatial modes of the bimodal fiber, namely LP01 and LP11, and then back into the LP01 mode of the second single mode fiber.

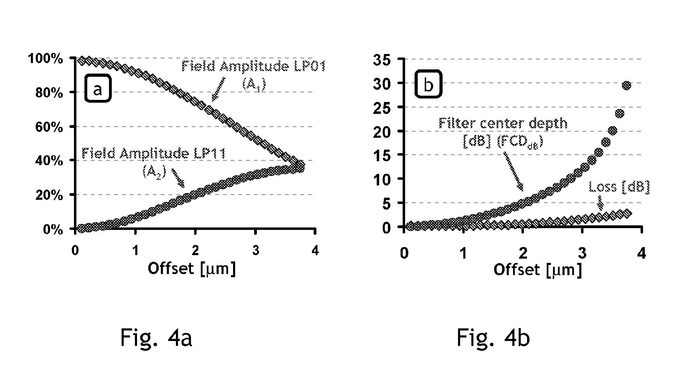

Figure 4a shows simulation results, only for illustration purposes, for the field amplitudes $A_1$ and $A_2$ at the input of the second single mode optical fiber 32 coming from LP01 and LP11 modes output from of the bimodal optical fiber 33 as a function of the splicing offset distance O. The splicing offset distance O was assumed to be the same at the input end 33a and at the output end 33b of the bimodal optical fiber 33, which is an ideal case. As a result, the filter center depth, i.e. the distance between the maxima and the minima of the filter's attenuation profile, varies according to the following relationship:

$$FCD = \left(\frac{E_{out,high}}{E_{out,low}}\right)^2 = \left(\frac{A_1 + A_2}{A_1 - A_2}\right)^2$$

And

$$FCD_{dB} = 10 \cdot \log_{10}(FCD)$$

Using this relationship, the results for the filter center depth are obtained as depicted in figure 4b together with the summed coupling loss of both splices.

Therefore, if for example, a filter with a filter center depth of 6dB is desired, an offset distance of 2.227$\mu$m is needed at both ends 33a and 33b of the bimodal fiber, leading to a coupling loss of 0.7 dB.

The value for a typical type of few-mode fiber are reported in the following table Fiber parameters:

- Step-index fibers
- core index (SMF and BMF): core = 1.454
- cladding index (SMF and BMF): $n_{cladding}$ = 1.4438
- Core radius SMF: $a_{SMF}$ = 2.5mm
- Core radius BMF: $a_{BMF}$ = 3.75mm

Where SMF stands for single mode optical fiber and BMF stands for Bi-modal optical fiber.

| Offset [mm] | FCD [dB] |
|---|---|
| 0 | 0 |
| 0.5 | 0.3 |
| 1 | 1.2 |
| 1.5 | 2.7 |
| 2 | 4.7 |
| 2.5 | 7.7 |
| 3 | 11.8 |
| 3.5 | 19.8 |
| 3.75 | 29.3 |

Figure 5 is an exemplary schematic representation of an optical device 50 comprising the filter of figure 3 in the form of a package. As shown in this figure an input optical fiber 51 is coupled by splicing at point 53 to an input end of the multi-mode optical fiber 54. Preferably the multi-mode optical fiber 54 is a "few-mode" optical fiber as described above. More preferably the multi-mode optical fiber is a bi-modal optical fiber.

An output optical fiber 52 is coupled by splicing at point 55 to an output end of the multi-mode optical fiber 54. The input optical fiber 51 and the output optical fiber 52 are each single mode optical fibers. The multi-mode optical fiber has a length L as shown in the figure in the form of a loop.

xxx Preferably the package has an electronic thermal adjustment set of pins 56. The splice points 53 and 55 and the multi-mode optical fiber 54 are preferably inside the package and the thermal control assembly 56 enables to stabilize the fiber temperature for example some pins may be used to obtain temperature

information and other pins may be used for heating up or cooling down the device.

By inserting this module in an optical system, for example after a multiplexer a spectral shaping may be obtained for all the channels. The thermal control may be adjusted in order to align the frequency of the filter with the frequency of the channels.

Therefore this invention provides a solution for the realization of a spectral shaping filter which may boost the performance of optical transport networks.

It is to be noted that the list of structures corresponding to the claimed means is not exhaustive and that one skilled in the art understands that equivalent structures can be substituted for the recited structure without departing from the scope of the invention.

It should be appreciated by those skilled in the art that any block diagrams herein represent conceptual views of illustrative circuitry embodying the principles of the invention.

**Claims**

1. An unbalanced interferometer based on multi-mode optical fiber wherein an offset splice is provided between a multi-mode optical fiber and at least two optical single mode optical fiber portions.

**2.** The interferometer of claim 1 comprising a first single mode optical fiber portion, a second single mode optical fiber portion and a multi-mode optical fiber, wherein the multi-mode optical fiber is coupled by a first splicing at one end to the first single mode optical fiber and by a second splicing at another end to the second single mode optical fiber, the first splicing comprising a first offset distance between a longitudinal axis of the multi-mode optical fiber and a longitudinal axis of the first single mode optical fiber.

**3.** The interferometer of claim 2 wherein the second splicing comprises a second offset distance between a longitudinal axis of the multi-mode optical fiber and a longitudinal axis of the second single mode optical fiber.

**4.** The interferometer of claim 3 wherein, the first and the second offset distances are equal.

**5.** The interferometer of any one of preceding claims wherein the multi-mode optical fiber is configured to allow propagation of less than ten optical modes.

**6.** The interferometer of claim 5 wherein the multi-mode optical fiber is configured to allow propagation of only two optical modes.

**7.** The interferometer of any one of the preceding claims configured to transfer optical energy from the first single mode optical fiber into at least two modes of the multimode optical fiber wherein the at least two modes of the multimode optical fiber have different propagation constants thereby causing to a time delay between the two modes at the output end of the multimode optical fiber.

**8.** The interferometer of claim 7 configured to generate a quasi-constant time delay thereby causing periodically different phase offsets between the two modes wherein said periodicity causes interference thereby providing a periodic filter with sinusoidal waveshape at the output thereof.

**9.** The interferometer of any one of claims 7 or 8 wherein the multimode optical fiber has a length wherein said length is inversely proportional to a product of a differential mode group delay of the multimode optical fiber and the difference in frequency peaks of the at least two mode propagating, in use, in the multimode optical fiber.

**10.** The interferometer of any one of the preceding claims 2 to 9 wherein a filter center depth of the interferometer is variable with variation in the offset distance.

**11.** The interferometer of any one of the preceding claims comprising thermal adjustment means for providing a temperature control on the multimode optical fiber.

Fig. 1

Filtering device attenuation profile

Wavelength [nm]

Fig. 2

31

30

33a

33

33b

32

**Fig. 3a**

33

Offset (O)

31

**Fig. 3b**

56

53

51

52

54

55

L

**Fig. 5**

Fig. 4a

Fig. 4b

Europäisches
Patentamt

European
Patent Office

Office européen
des brevets

# EUROPEAN SEARCH REPORT

**Application Number**

EP 11 30 5802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARBORE M A ET AL: "ANALYSIS OF THE INSERTION LOSS AND EXTINCTION RATIO OF TWO-MODE FIBER INTERFEROMETRIC DEVICES", OPTICAL FIBER TECHNOLOGY, ACADEMIC PRESS, LONDON, US, vol. 2, no. 4, 1 October 1996 (1996-10-01), pages 400-407, XP002039728, ISSN: 1068-5200, DOI: 10.1006/OFTE.1996.0046 * the whole document * | 1-11 | INV. G02B6/26 H04B10/00 H04J14/02 |
| X | US 5 796 891 A (POUSTIE ALISTAIR J [GB] ET AL) 18 August 1998 (1998-08-18) * column 1, line 6 - line 27 * * column 4, line 45 - column 5, line 44; figures 1-5 * | 1-11 | |
| A | Samuel Varghese: "An All-Fiber Mode Conditioner for Multimode Networks" In: "Fabrication and Characterization of All-Fiber Components for Optical Access Networks; thesis", 1 December 2008 (2008-12-01), XP55012105, pages 137-161, * page 147, last paragraph - page 151, last paragraph * | 1-11 | |
| | -/-- | | TECHNICAL FIELDS SEARCHED (IPC) G02B H04B H04J G01B H01S G01D |

The present search report has been drawn up for all claims

| Place of search | Date of completion of the search | Examiner |
|---|---|---|
| Munich | 15 November 2011 | Petelski, Torsten |

EPO FORM 1503 03.82 (P04C01)

EP 2 538 253 A1

Europäisches
Patentamt

European
Patent Office

Office européen
des brevets

# EUROPEAN SEARCH REPORT

Application Number

EP 11 30 5802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI Q ET AL: "Demonstration of high extinction ratio modal interference in a two-mode fiber and its applications for all-fiber comb filter and high-temperature sensor", OPTICS COMMUNICATIONS, NORTH-HOLLAND PUBLISHING CO. AMSTERDAM, NL, vol. 250, no. 4-6, 15 June 2005 (2005-06-15), pages 280-285, XP004941777, ISSN: 0030-4018, DOI: 10.1016/J.OPTCOM.2005.02.030 * the whole document * | 1-11 | |
| A | HAE YOUNG CHOI ET AL: "All-fiber Mach-Zehnder type interferometers formed in photonic crystal fiber", OPTICS EXPRESS, OSA (OPTICAL SOCIETY OF AMERICA), WASHINGTON DC, (US), vol. 15, no. 9, 25 April 2007 (2007-04-25), pages 5711-5719, XP002462605, ISSN: 1094-4087, DOI: 10.1364/OE.15.005711 * the whole document * | 1-11 | TECHNICAL FIELDS SEARCHED (IPC) |

The present search report has been drawn up for all claims

| Place of search | Date of completion of the search | Examiner |
|---|---|---|
| Munich | 15 November 2011 | Petelski, Torsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 5802

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2011

| Patent document cited in search report | | Publication date | Patent family member(s) | | Publication date |
|---|---|---|---|---|---|
| US 5796891 | A | 18-08-1998 | CA | 2176027 A1 | 18-05-1995 |
| | | | DE | 69429448 D1 | 24-01-2002 |
| | | | DE | 69429448 T2 | 25-07-2002 |
| | | | JP | H09505154 A | 20-05-1997 |
| | | | US | 5796891 A | 18-08-1998 |
| | | | WO | 9513552 A2 | 18-05-1995 |

For more details about this annex : see Official Journal of the European Patent Office, No. 12/82